# EUROPÄISCHE PATENTSCHRIFT

(11) **EP 1 730 827 B1**
(45) Veröffentlichungstag und Bekanntmachung des Hinweises auf die Patenterteilung: **06.06.2012**
(21) Anmeldenummer: 05733911.1
(22) Anmeldetag: 30.03.2005
(51) Int. Cl.: H02H 3/04, H01C 7/12

(54) **ANORDNUNG ZUM ABLEITEN VON ÜBERSPANNUNGEN MIT EINEM ODER MEHREREN PARALLEL GESCHALTETEN, IN EINER BAULICHEN EINHEIT BEFINDLICHEN ÜBERSPANNUNGSBEGRENZENDEN ELEMENTEN**
DEVICE FOR DEVIATING OVERVOLTAGES COMPRISING ONE OR SEVERAL PARALLEL MOUNTED OVERVOLTAGE LIMITING ELEMENTS ARRANGED IN A STRUCTURAL UNIT
DISPOSITIF POUR DEVIER DES SURTENSIONS COMPRENANT UN OU PLUSIEURS ELEMENTS DE LIMITATION DE LA SURTENSION, MONTES EN PARALLELE ET DISPOSES DANS UNE UNITE STRUCTURELLE

(30) Priorität: 02.04.2004 DE 102004016377; 18.05.2004 DE 102004024657
(43) Veröffentlichungstag der Anmeldung: 13.12.2006
(73) Patentinhaber: DEHN + SÖHNE GMBH + CO. KG, 92306 Neumarkt (DE)
(72) Erfinder: ZÄUNER, Edmund, 92334 Berching (DE); GAECK, Florian, 92318 Neumarkt (DE); WITTMANN, Georg, 92283 Lauterhofen (DE); HIERL, Stefan, 92318 Neumarkt (DE); EHRLER, Jens, 92318 Neumarkt (DE)
(74) Vertreter: Kruspig, Volkmar
(86) Internationale Anmeldenummer: PCT/EP2005/003335
(87) Internationale Veröffentlichungsnummer: WO 2005/096464

(56) Entgegenhaltungen:
- EP-A- 0 716 493
- EP-A- 1 022 837
- GB-A- 690 495
- US-A- 5 574 614

## Beschreibung

Die Erfindung betrifft eine Anordnung zum Ableiten von Überspannungen mit einem oder mehreren parallel geschalteten, in einer baulichen Ein heit befindlichen überspannungsbegrenzenden Elementen, wie Varistoren, Dioden oder dergleichen, umfassend mindestens eine Schaltvorrichtung, um bei thermischer Überlastung des oder der überspannungsbegrenzenden Elemente diese elektrisch abzutrennen, sowie Mittel zur Anzeige und/oder Meldung des dann gegebenen Fehlerzustands, gemäß Oberbegriff des Patentanspruchs 1.

Überspannungsschutz-Anordnungen mit einem in einem Gehäuse u ntergebrachten Varistor, wobei eine bei Überhitzung des Varistors sich unter Federkraft öffnende Lotstelle eines Thermoschalters im Stromweg zwischen Netzanschluss und Varistor vorgesehen ist und hierzu einer der Kontakte der Lotstelle sich an einem durch die Federkraft in Öffnungsrichtung belasteten Kontaktbügel befindet, sind beispielsweise aus dem deutschem Gebrauchsmuster 93 05 796 U vorbekannt. Bei derartigen Anordnungen besteht auch die Möglichkeit, dass ein erhöhter Stoßstrom, der über dem Nenna bleit-Stoßstrom liegt, zum Abschalten des vorgesehenen Varistors führt. Hierfür befindet sich im Verlauf des Kontaktbügels eine Sollbruchstelle, deren Querschnitt und damit mechanisches Widerstandsmoment kleiner als der Querschnitt des Kontaktbügels in seinem übrigen Verlauf ist. Die durch einen entsprechend hohen Stoßstrom entstehenden elektrodynamischen Kräfte wirken quer zur Stromflussrichtung und damit quer zur Längsrichtung des Kontaktbügels. Diese bewirken daher ein Durchbrechen des Kontaktbügels an der Sollbruchstelle.

Bei der Anordnung zur Ableitung von Überspannungen gemäß DE 41 24 321 C2 sind mehrere überspannungsbegrenzende Elemente, z.B. Varistoren oder Dioden und z.B. durch Überhitzung oder Feststellung des Leckstroms auslösende Abschaltmittel vorgesehen. Um die Sicherheit einer solchen Anordnung zu verbessern, insbesondere redundant auszubilden, so dass bei Ausfall eines der überspannungsbegrenzenden Elemente der Betrieb mit einem anderen überspannungsbegrenzenden Element weitergeführt werden kann, wobei zugleich eine einwandfreie Abschaltung eines defekten und überhitzten überspannungsbegrenzenden Elements gewährleistet sein soll, ist vorgesehen, dass zumindest zwei überspannungsbegrenzende Elemente vorhanden sind, von denen jedes Element für sich ausreichend dimensioniert ist, um an der betreffenden Einsatzstelle den Überspannungsschutz zu gewährleisten. Weiterhin ist auch bei dieser Lösung eine Thermosicherung vorgesehen, die im Strompfad des einen, ersten überspannungsbegrenzenden Elements liegt und welche bei dessen Überhitzung abschaltet und das zweite überspannungsbegrenzende Element zuschaltet.

Gemäß EP 0 716 493 A1 gehört eine Vorrichtung zum Schutz gegen das Auftreten von transienten elektrischen Überspannungen mit wenigstens zwei Varistoren zum Stand der Technik, welche Trennmittel aufweist, die bezüglich des Zustands der vorerwähnten Varistoren empfindlich sind und welche die Varistoren an ihrem Lebensende einzeln abtrennen. Weiterhin sind mechanische Mittel zum Visualisieren des Zustands der Varistoren vorhanden, die funktionell mit dem Trennmittel verbunden sind, um durch diese betätigt zu werden und beim Erreichen einer ersten Grenztemperatur das elektrische Abtrennen und die Fehlerzustands-Anzeige zu realisieren. Mit Hilfe der mechanischen Visualisisierungsmittel kann unterschieden werden, ob beide Varistoren in Betrieb sind, einer der beiden Varistoren abgetrennt oder beide Varistoren sich im abgetrennten Zustand befinden. Die mechanischen Visualisierungsmittel weisen einen Läufer auf, der von den Trennzungen parallel montierter Varistoren betätigbar ist.

Die vorbekannten thermischen Abtrennvorrichtungen basieren auf Lötverbindungen, die am Lebensende des Überspannungsableiters bzw. bei Überlastung der aktiven Komponenten diese elektrisch abtrennen und eine optische und/oder elektrische Anzeige bzw. Meldeeinrichtung unmittelbar oder mittelbar betätigen.

Wie vorstehend erläutert, besteht nach dem Stand der Technik die Möglichkeit, entweder einer Varistorscheibe eine thermische Abtrennvorrichtung zuzuordnen oder aber zwei Varistorscheiben mit je einer Abtrennvorrichtung zu versehen, die im Überlastfall die betroffene Scheibe abtrennt und eine zweite Varistorscheibe zuschaltet. Nachteilig bei den vorbekannten Lösungen ist die Tatsache, dass im Defekt-/Überlastfall mit dem Auftrennen der thermischen Abtrennvorrichtung das jeweilige Gerät vom Netz getrennt wird. Hierbei werden zwar weitere Folgeschäden vermieden, jedoch ist der Überspannungsschutz nicht mehr vorhanden oder nur noch eingeschränkt wirksam.

Aus dem Vorgenannten ist es daher Aufgabe der Erfindung, eine weiterentwickelte Anordnung zum Ableiten von Überspannungen mit einem oder mehreren parallel geschalteten, in einer baulichen Einheit befindlichen überspannungsbegrenzenden Elementen, wie Varistoren, Dioden oder dergleichen anzugeben, wobei die Anordnung mindestens eine Schaltvorrichtung umfasst, um bei thermischer Überlastung des oder der überspannungsbegrenzende Elemente diese elektrisch abzutrennen und den jeweiligen Zustand anzuzeigen oder zu melden. Hierbei soll eine drohende Überlastung des jeweiligen Überspannungsschutzgeräts, hervorgerufen durch z.B. temperaturbedingte Alterungsprozesse der aktiven Varistorscheibe oder wiederholter Stoßstrombelastung der aktiven Komponenten rechtzeitig erkennbar sein. Zu diesem Zweck gilt es die Anordnung so auszugestalten, dass quasi im Sinne einer Vorwarnstufe eine Lebensdauer-Anzeige erfolgt. Ergänzend muss die Möglichkeit bestehen, die Vorwarnstufe so abzustimmen, dass ein ausreichender Abstand bezüglich dieser Anzeige hinsichtlich einer nur noch eingeschränkten Restlebensdauer hin zu einem irreparablen Schaden und damit der erforderlichen endgültigen Abtrennung des Gerätes vom Netz vorhanden ist bzw. besteht.

Die Lösung der Aufgabe der Erfindung erfolgt durch eine Anordnung gemäß der Merkmalskombination nach Patentanspruch 1, wobei die Unteransprüche mindestens zweckmäßige Ausgestaltungen und Weiterbildungen darstellen. Bei routinemäßigen Wartungsarbeiten kann ein erkennbar vorgeschädigter Ableiter ausgetauscht werden, ohne dass zwischenzeitlich die Anlage ohne oder nur mit eingeschränktem Überspannungsschutz betrieben wird.

Im Gegensatz zu Lösungen nach dem Stand der Technik bleibt das volle Ableitvermögen, d.h. die Stoßstrom-Tragfähigkeit bis zum Lebensdauerende erhalten. Mit anderen Worten wird auch bei mehreren Varistorpfaden kein Pfad im Rahmen der Vorwarnung vom Netz getrennt. Es erhöht sich also insgesamt der Schutzgrad von Anlagen, die mit der erfindungsgemäßen Anordnung ausgerüstet sind.

Es ist, in thermischem Kontakt mit den überspannungsbe-grenzenden Elementen stehend, eine erste Schaltvorrichtung vorgesehen, welche beim Erreichen einer ersten Grenztemperatur T1 eine optische Anzeige betätigt oder auslöst, um das Erreichen der vorerwähnten Grenznutzungs- oder -lebensdauer des oder der überspannungsbegrenzenden Elemente zu signalisieren.

Erfindungsgemäß ist eine zweite, in thermischem Kontakt mit den überspannungsbegrenzenden Elementen stehende Schaltvorrichtung vorhanden, welche beim Erreichen einer zweiten Grenztemperatur T2 das elektrische Abtrennen und die Fehlerzustands-Anzeige in an sich bekannter Weise realisiert, wobei gilt, dass T2 > T1 ist.

Die erste Schaltvorrichtung steht in einer Ausführungsform der Erfindung mit einem Fernmeldekontakt in Wirkverbindung, so dass eine bereits eingeschränkte Restnutzungsdauer oder ein erkannter abnormaler Zustand an eine Wartungszentrale weitergeleitet werden kann.

Erfindungsgemäß ist die erste und die zweite Schaltvorrichtung mechanisch mit je einem oder einem gemeinsamen Schieber verbunden bzw. wirkt auf einen solchen Schieber, wobei der Schieber auf einer Stirnseite der baulichen Einheit befindlich ist und durch

Längsbewegung aufgrund der jeweils aktivierten Schaltvorrichtung ein farblich gestaltetes oder farbmarkiertes Sichtfeld auf der Stirnseite freigibt.

Hierbei wird das Konzept der Lebensdauer-Anzeige der Anordnung zum Überspannungsschutz bevorzugt durch eine dreistufige, mehrfarbige optische Anzeige umgesetzt. Dabei entspricht beispielsweise die Anzeigefarbe "grün" einem vollfunktionsfähigen Ableiter, die Anzeigefarbe "gelb" steht für einen vorbelasteten/gealterten Ableiter, die Anzeige "rot" für ein überlastetes, abgetrenntes Schutzmodul. Dieses muss dann ausgetauscht werden, wobei, wie bereits erläutert, ein vorhandener Fernmeldekontakt bereits bei der quasi Vorschädigungsstufe des Ableiters aktiviert wird.

Die erste Schaltvorrichtung der Erfindung ist als ein Mittel mit sich bei Wärmeeinwirkung verändernden optischen Eigenschaften, beispielsweise als sogenannte Thermocolorfolie ausgeführt.

Die Schaltvorrichtungen umfassen gemäß einer Ausgestaltung der Erfindung Hebelelemente, welche unter Federspannung in einer ersten Position befindlich sind, wobei die erste Position durch ein Schmelzlot, Wachs, Thermoplast oder dergleichen Material fixiert ist. Der Schmelzpunkt dieses Materials bei der ersten Schaltvorrichtung ist kleiner gewählt als der Schmelzpunkt der zweiten Schaltvorrichtung.

In einer Alternative können die Schaltvorrichtungen Hebelelemente aufweisen, welche unter Vorspannung mindestens einer Feder stehen, wobei eine erste Position der ersten Schaltvorrichtung von einem Schrumpfschlauchmaterial fixiert ist derart, dass bei thermischer Belastung bis zur Grenztemperatur T1 eine Positionsveränderung des jeweiligen Hebelelements mit gleichzeitiger optischer Signalisierung durch den Schrumpfungsprozess des Schlauchmaterials eintritt.

Durch die Wahl des Abstands der Grenztemperatur T1 von T2 ist eine erfindungsgemäße kundenspezifische Anpassung an das jeweilige Sicherheitsbedürfnis im Sinne der Aufgabenstellung der Erfindung realisierbar.

Eine Bauvariante der Anordnung zum Ableiten von Überspannungen geht von innerhalb der baulichen Einheit befindlichen zwei Varistorscheiben als überspannungsbegrenzende Elemente aus, die parallel und beabstandet nebeneinander befindlich sind.
Die Schaltvorrichtungen sind hier zwischen den Varistorscheiben bevorzugt an einer Trennwand angeordnet, wobei Kontaktierungsscheiben oder -bleche der Varistoren in thermischem Kontakt mit der jeweiligen Schaltvorrichtung stehen.

Die Erfindung soll nachstehend anhand von Ausführungsbeispielen sowie unter Zuhilfenahme von Figuren näher erläutert werden.

Hierbei zeigen:
- Fig. 1: ein Prinzipschaltbild der erfindungsgemäßen Anordnung mit Lebensdauer-Überwachung bzw. -Anzeige;
- Fig. 2: eine erste technische Ausführungsform der Anordnung;
- Fig. 3: eine zweite Ausführungsform der erfindungsgemäßen Anordnung;
- Fig. 4: eine Ausführungsform der erfindungsgemäßen Anordnung mit Schrumpfschlauch als erste Schaltvorrichtung;
- Fig. 5: eine Ausführungsform einer nicht mechanisch wirkenden ersten Schaltvorrichtung, sondern eines bei thermischer Belastung einen Farbumschlag oder eine Farbänderung aufweisenden Indikators;
- Fig. 6: eine perspektivische Darstellung eines Varistormoduls mit zwei parallel geschalteten Varistorscheiben und dazwischen befindlicher Anordnung aus Schaltvorrichtungen;
- Fig. 7: eine Darstellung der Wirkungsweise der ersten, mechanisch ausgeführten Schaltvorrichtung zur Lebensdauer-Anzeige und
- Fig. 8: eine Darstellung mit bereits freigegebener erster Schaltvorrichtung sowie im unteren Bildteil die Darstellung des Farbumschlags bei elektrisch abgetrennter Varistoreinheit von gelb auf rot.

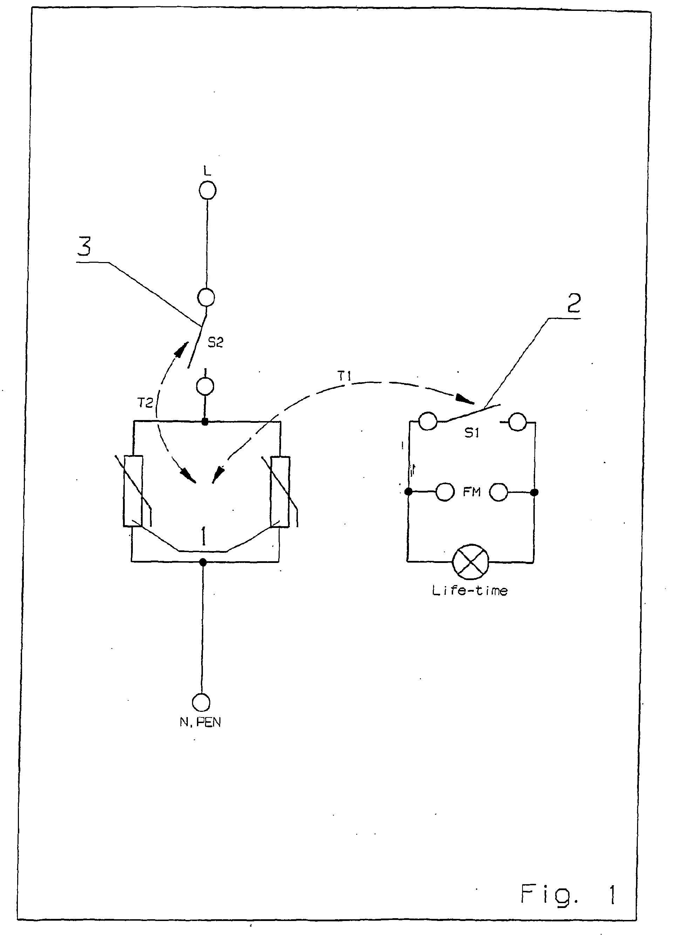

Gemäß Ausführungsbeispiel besteht das Überspannungsschutzgerät aus einem Varistormodul mit zwei parallel geschalteten scheibenförmigen Varistoren 1 sowie einer integrierten Lebensdauer-Anzeigeinrichtung 2 sowie einer Abtrennvorrichtung 3 (siehe Fig. 1).

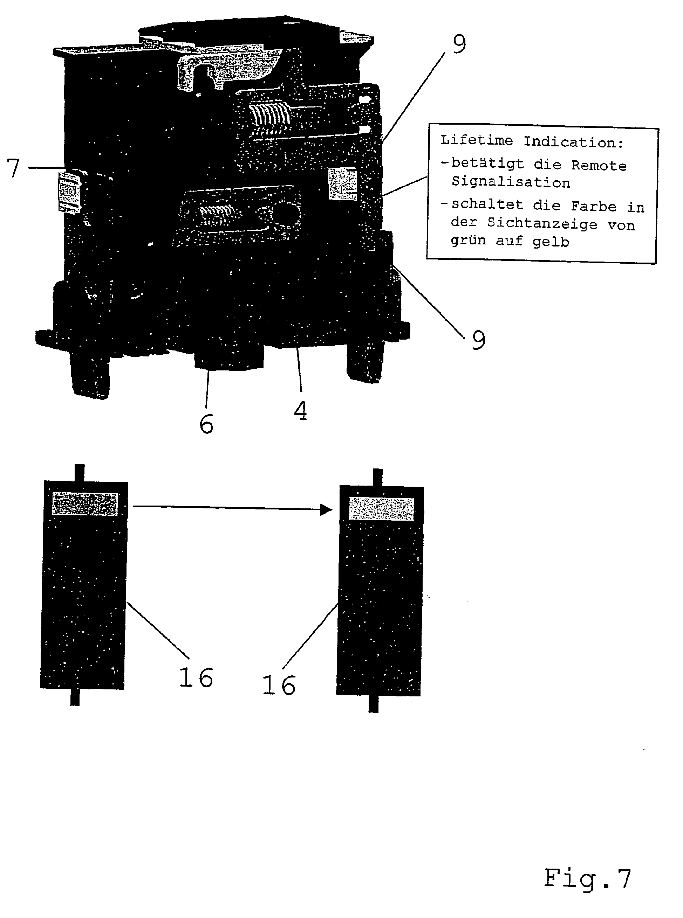

Die Lebensdauer-Anzeige 2 (Stufe S1) bewertet die Temperatur der Varistoreinheit 1 und schaltet bei Überschreiten einer definierten Grenztemperatur T1 die Sichtanzeige (siehe Fig. 7) von grün auf gelb und betätigt eine Fernsignalisierung FM.

Bei der technischen Realisierung der Lebensdauer-Anzeige ist dafür Sorge getragen, dass eine optimale Kontaktblechgestaltung der Varistoreinheit mit maximaler Wärmestromdichte erfolgt, was zur selektiven Erwärmung der verschiedenen, temperaturabhängigen Komponenten, bevorzugt Schmelzlote, notwendig ist.
Neben der Verwendung von Schmelzloten können ebenfalls auch andere temperaturselektive Wachse, Kunststoffe, Schrumpfschläuche oder ähnliche Mittel Verwendung finden.

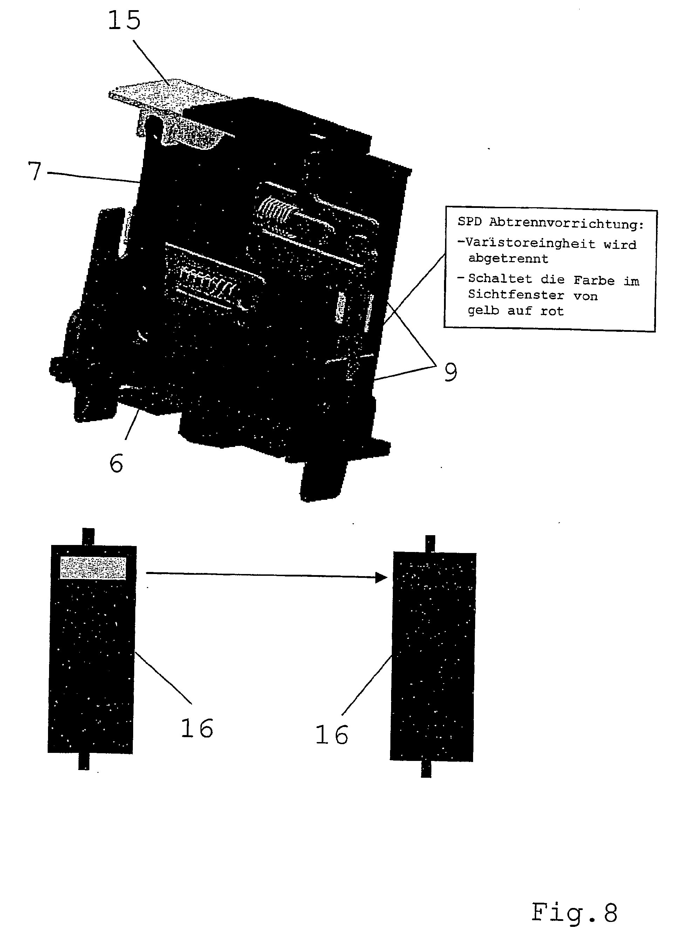

Die thermische Abtrennvorrichtung (Stufe S2 nach Fig. 1) trennt bei einer kritischen Temperatur T2 (T2 > T1) die Varistoreinheit 1 ab und schaltet die Sichtanzeige von gelb auf rot (siehe Fig. 8).

Der notwendige Abstand zwischen der quasi Vorwarnung und dem Auslösen der thermischen Abtrennvorrichtung ist über die selektive Temperatur-Staffelung der verwendeten thermisch beeinflussbaren Komponenten in einem weiten Bereich werkseitig bzw. kundenspezifisch einstellbar.

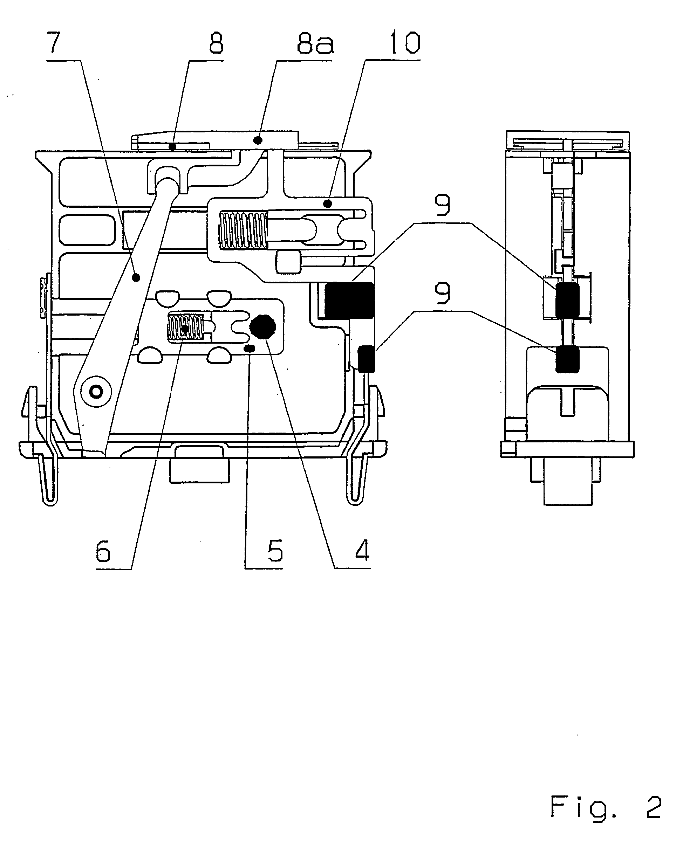

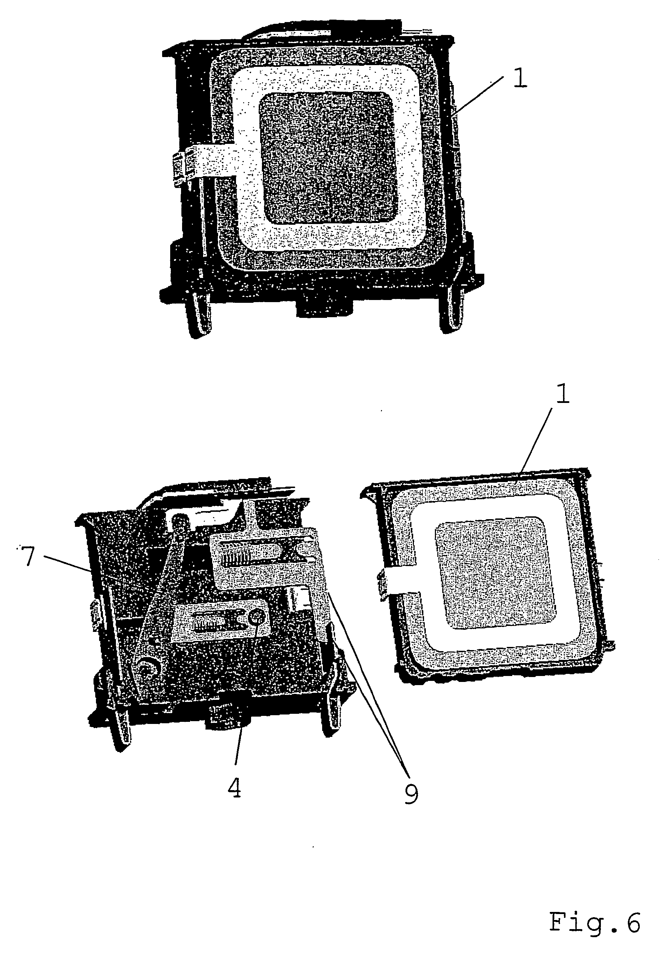

Gemäß der ersten Ausführungsform der erfindungsgemäßen Anordnung nach Fig. 2 ist ein erster Temperaturmesspunkt T1 (Bezugszeichen 4) über eine z.B. Weichlotverbindung zwischen den Kontaktflächen (siehe Fig. 6) mit der Schalteinheit S1 (Bezugszeichen 5) verbunden. Selbige wird im Auslösefall durch die vorgespannte Feder 6 bewegt, so dass der Signalhebel 7 die Vorwarnstufe 8, welche einen Schieber darstellt und die Fernmeldung auslöst, so dass ein Sichtfenster von grün auf gelb umgeschaltet wird.

Mit Überschreiten der Schwelltemperatur T2 im Bereich 9 wird der Schalter S2 (Bezugszeichen 10) betätigt, der dann die Einheit endgültig vom Netz trennt. Der Schalter S2 bewegt wiederum einen Anzeigeschieber 8a, der dann in der Sichtanzeige "rot" signalisiert. Dieser Schalter S2 ist als federbelasteter Kontakt, der unter entsprechender Vorspannung steht, ausführbar.

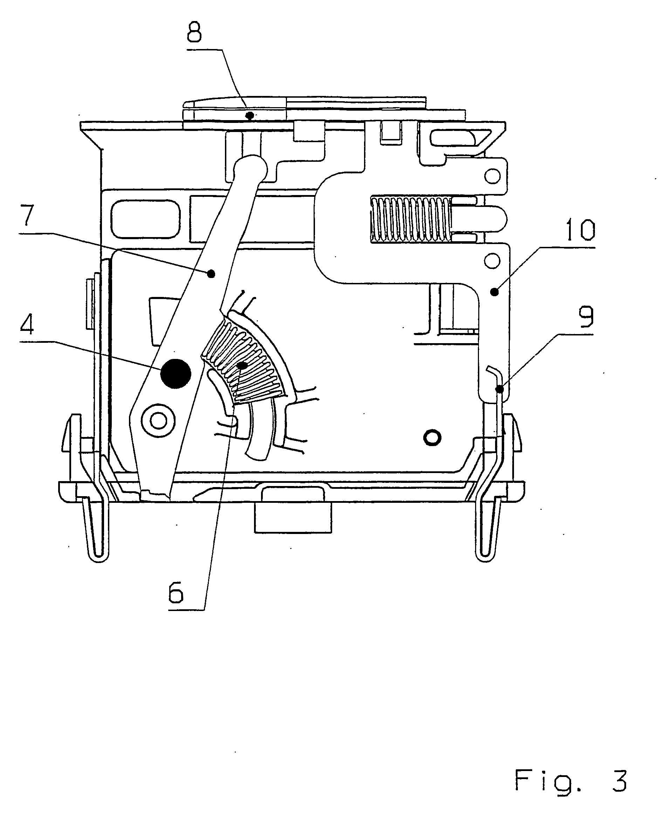

Bei der Ausführungsform der Anordnung gemäß Fig. 3 ist für die erste Schaltvorrichtung wiederum eine vorgespannte Feder 6 vorgesehen, die sich in einer Kulissenführung befindet, wobei letztere noch einen Führungsbügel aufnimmt. Wenn im Bereich 4 die dort ausgebildete Weichlotverbindung schmilzt, bewegt sich der Signalhebel 7 unter Wirkung der Kraft der Feder 6 bildseitig nach links und nimmt die Lebensdauer-Anzeige 8 über eine Aufnahme mit, mit der Folge, dass auf der Sichtseite der Baueinheit ein andersfarbiges Feld freigegeben wird.

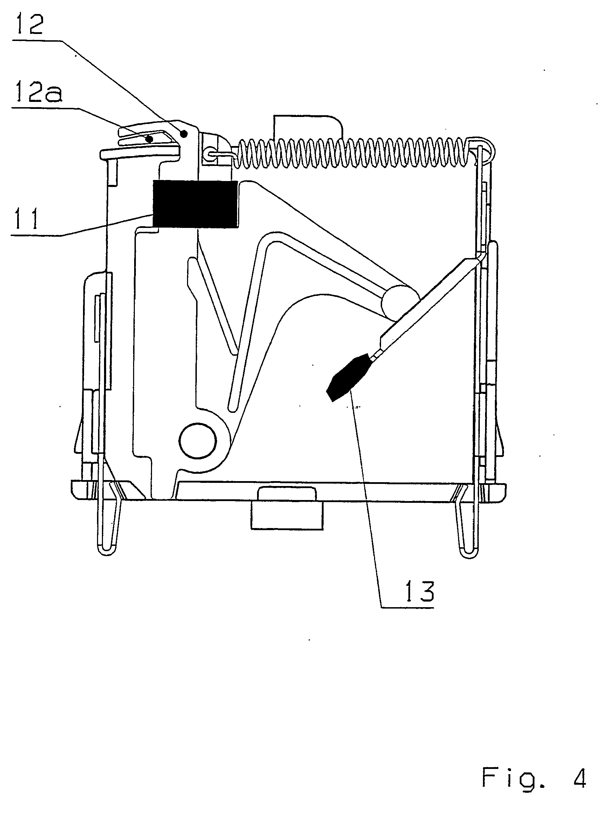

Bei dem Ausführungsbeispiel gemäß Fig. 4 wird als Indikator für das Erreichen der Vorwarnschwelle bei der Temperatur T1 ein temperaturabhängiger Schrumpfschlauch 11 benutzt.

Bei Erreichen einer über die Materialparameter des Schrumpfschlauches einstellbaren Schwelle reduziert der Schlauch seinen Durchmesser und bewegt ein Anzeigeelement 12, so dass die Vorwarnstufe 12a frei sichtbar wird.

Mit Überschreiten der Grenztemperatur T2 am Punkt 13 erfolgt dann das endgültige Abtrennen des Gesamtgeräts analog der Wirkungsweise einer Schmelzlot-Thermosicherung.

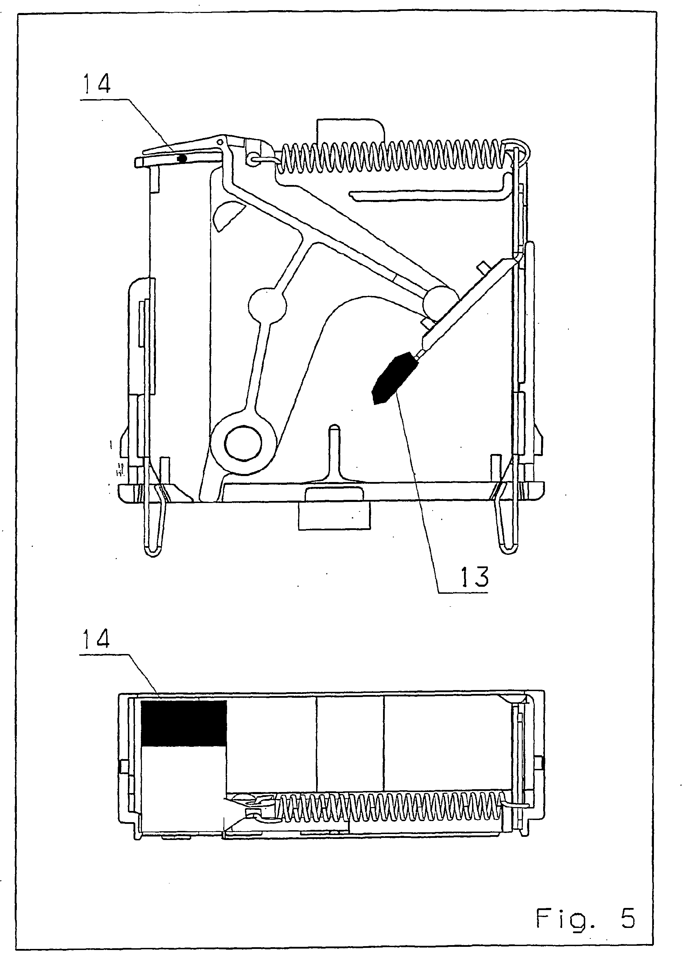

Bei der Lösungsvariante gemäß Ausführungsbeispiel nach Fig. 5 wird die Vorwarnstufe über einen temperaturabhängigen Farbwechsel eines Anzeigeelements 14 signalisiert. In diesem Falle tritt eine Verfärbung z.B. eines Thermocolormaterials beim Erreichen der Temperatur T1 auf. Nach Überschreiten der Temperatur T2 im Bereich der Lotverbindung 13 löst dann die zugeord nete Schaltvorrichtung in an sich bekannter Weise aus und führt eine Netztrennung der Gerätes durch.

Fig. 6 stellt die Sandwichanordnung eines Varistormoduls mit zwei parallel geschalteten Varistorscheiben dar (oberer Bildteil).

Im unteren Bildteil ist erkennbar, dass im Raum zwischen den Varistorscheiben die erste und die zweite Schaltvorrichtung baulich untergebracht sind.

Diese Anordnung ermöglicht einen optimalen thermischen Kontakt der temperaturrelevanten Stellen 4 und 9, an welchen die jeweilige z.B. Weichlotverbindung mit unterschiedlichem Schmelzpunkt zum Fixieren der ersten Position der Hebelelemente der Schaltvorrichtungen unter Federvorspannung ausgeführt ist.

Nach Fig. 7, oberer Bildteil, befindet sich das Varistormodul im vollfunktionsfähigen Zustand. Gemäß Fig. 8 oberer Bildteil und Fig. 7 unterer Bildteil ist mit Erreichen oder Überschreiten der ersten Temperatur T1 der Trennvorgang im Bereich 4 vollzogen. Der Hebel 7 bewegt sich hierbei aufgrund der Vorspannung der Feder 6 gemäß Abbildung nach links und nimmt einen Schieber 15 mit. Im Ergebnis erfolgt unter Hinweis auf die Darstellung nach Fig. 7 unten in einem Sichtfenster der Abdeckkappe 16 der baulichen Einheit eine Farbänderung.

Mit Auslösen der thermischen Sicherung im Bereich 9 erfolgt wiederum eine Farbveränderung von z.B. gelb nach rot (Fig. 8, unterer Bildteil), wodurch eindeutig ein Geräteausfall mit erforderlichem Austausch des Moduls erkennbar ist.

## Patentansprüche

1. Anordnung zum Ableiten von Überspannungen mit einem oder mehreren parallel geschalteten, in einer baulichen Einheit befindlichen überspannungsbegrenzenden Elementen, wie Varistoren (1), Dioden oder dergleichen, umfassend mindestens eine Schaltvorrichtung, um bei thermischer Überlastung des oder der überspannungsbegrenzenden Elemente diese elektrisch abzutrennen, sowie Mittel zur Anzeige und/oder Meldung des dann gegebenen Fehlerzustands, wobei
in thermischem Kontakt mit den überspannungsbegrenzenden Elementen stehend, eine erste Schaltvorrichtung (5) vorgesehen ist, welche beim Erreichen einer ersten Grenztemperatur T1 eine optische Anzeige betätigt oder auslöst, das Erreichen einer Grenznutzungs- oder -lebensdauer des oder der überspannungsbegrenzenden Elemente zu signalisieren, **dadurch gekennzeichnet, dass**
weiterhin eine zweite, in thermischem Kontakt mit den überspannungsbe-grenzenden Elementen stehende Schaltvorrichtung (10) vorgesehen ist, welche beim Erreichen einer zweiten Grenztemperatur T2 das elektrische Abtrennen und die Fehlerzustands-Anzeige
realisiert, wobei die Grenztemperatur T2 größer als die Grenztemperatur T1 ist und die erste und zweite Schaltvorrichtung mechanisch mit je einem Schieber (8;8a) verbunden sind, wobei die Schieber (8;8a) auf einer Stirnseite der baulichen Einheit befindlich sind und durch Längsbewegung aufgrund der jeweils aktivierten Schaltvorrichtung ein farblich gestaltetes oder farbmarkiertes Sichtfeld auf der Stirnseite freigegeben wird sowie durch die Wahl des Abstands der Grenztemperatur T1 von der Grenztemperatur T2 eine kundenspezifische Anpassung an das jeweilige Sicherheitsbedürfnis realisierbar ist.

2. Anordnung nach Anspruch 1,
**dadurch gekennzeichnet, dass**
die erste Schaltvorrichtung mit einem Fernmeldekontakt in Wirkverbindung steht.

3. Anordnung nach Anspruch 1 oder 2,
**dadurch gekennzeichnet, dass**
die Schaltvorrichtungen Hebelelemente (7) umfassen, welche unter Federvorspannung (6) in einer ersten Position befindlich sind, wobei die erste Position durch ein Schmelzlot, Wachs, Thermoplast oder dergleichen Material fixiert ist sowie der Schmelzpunkt dieses Materials bei der ersten Schaltvorrichtung (5) kleiner gewählt ist als derjenige bei der zweiten Schaltvorrichtung (10).

4. Anordnung nach Anspruch 1 oder 2,
**dadurch gekennzeichnet, dass**
die Schaltvorrichtungen Hebelelemente aufweisen, welche unter Vorspannung mindestens einer Feder stehen, wobei eine erste Position der ersten Schaltvorrichtung von einem Schrumpfschlauchmaterial (11) fixiert ist derart, dass bei thermischer Belastung bis zur Grenztemperatur T1 eine Positionsveränderung des jeweiligen Hebelelements mit gleichzeitiger optischer Signalisierung durch den Schrumpfungsprozess des Schlauchmaterials eintritt.

5. Anordnung nach einem der vorangegangenen Ansprüche,
**dadurch gekennzeichnet, dass**
innerhalb der baulichen Einheit zwei Varistorscheiben als überspannungsbegrenzende Elemente parallel und beabstandet nebeneinander befindlich sind, wobei die Schaltvorrichtungen zwischen den Varistorscheiben an einer Trennwand angeordnet sind und Kontaktierungsscheiben oder -bleche zum Anschluss der Varistoren in thermischem Kontakt mit der jeweiligen Schaltvorrichtung stehen.

## Claims

1. Arrangement for diverting overvoltages, comprising one or more overvoltage-limiting elements such as varistors (1), diodes or the like, which are connected in parallel and are located in one unit, comprising at least one switching device to electrically disconnect the overvoltage-limiting element(s) in the event of a thermal overload of the same, as well as means for displaying and/or reporting the present error condition, wherein a first switching device (5) being in thermal contact with the overvoltage-limiting elements is provided, which actuates or triggers an optical display if a first limit temperature T1 is reached in order to signal that a service life or working life limit of the overvoltage-limiting element(s) has been reached,
**characterized in that**
furthermore a second switching device (10) being in thermal contact with the overvoltage-limiting elements is provided, which realizes the electrical disconnection and error condition display if a second limit temperature T2 is reached, wherein the limit temperature T2 is greater than limit temperature T1 and the first and second switching devices are each mechanically connected to a slide (8; 8a), wherein the slides (8; 8a) are located on a front face of the unit, and by the longitudinal movement owing to the respectively activated switching device a color-designed or color-marked viewing field on the front face is exposed, and by choosing the space between limit temperature T1 and limit temperature T2 a customer-specific adjustment to the respective security need is realizable.

2. Arrangement according to claim 1,
**characterized in that**
the first switching device is operatively connected to a remote signaling contact.

3. Arrangement according to claim 1 or 2,
**characterized in that**
the switching devices comprise lever elements (7) which are located under a spring preload (6) in a first position, wherein the first position is fixed by a meltable solder, wax, thermoplastic or similar material, and the melting point of this material in the first switching device (5) is chosen to be smaller than that of the second switching device (10).

4. Arrangement according to claim 1 or 2,
**characterized in that**
the switching devices comprise lever elements preloaded by at least one spring wherein a first position of the first switching device is fixed by a heat shrinkable tubing material (11) in such a way that in the event of a thermal overload up to the limit temperature T1 the position of the respective lever element is changed and an optical signaling takes place at the same time as a result of the shrinking process of the tubing material.

5. Arrangement according to one of the preceding claims,
**characterized in that**
two varistor discs are located as overvoltage-limiting elements in the unit in parallel and side by side with a space there between, wherein the switching devices are disposed between the varistor discs on a partition wall and contacting discs or contacting sheets for connecting the varistors are in thermal contact with the respective switching device.

## Revendications

1. Agencement pour la dérivation de surtensions, comprenant un ou plusieurs éléments de limitation de surtension, branchés en parallèle et placés dans une unité structurelle, tels que varistors (1), diodes ou similaires, comprenant au moins un dispositif de commutation destiné à isoler électriquement l'élément ou les éléments de limitation de surtension en cas de surcharge thermique de celui-ci/ceux-ci, ainsi que des moyens pour indiquer et/ou pour signaler l'état d'erreur alors en présence, dans lequel
il est prévu un premier dispositif de commutation (5), en contact thermique avec les éléments de limitation de surtension, dispositif qui, lorsqu'une première température limite T1 est atteinte, actionne ou déclenche un indicateur optique afin de signaliser qu'une durée d'utilisation limite ou une durée de vie limite de l'élément ou des éléments de limitation de surtension est atteinte,
**caractérisé en ce que**
il est en outre prévu un second dispositif de commutation (10), en contact thermique avec les éléments de limitation de surtension, dispositif qui, lorsqu'une seconde température limite T2 est atteinte, réalise l'isolation électrique et l'indication de l'état d'erreur, dans lequel la température limite T2 est supérieure à la température limite T1, et le premier dispositif de commutation et le second dispositif de commutation sont reliés mécaniquement chacun avec un curseur (8 ; 8a), de sorte que les curseurs (8 ; 8a) se trouvent sur une face frontale de l'unité structurelle et par déplacement longitudinal en raison du dispositif de commutation respectivement activé, un champ visible conçu en couleurs ou marqué avec des couleurs sur la face frontale est dégagé et, par le choix de la distance de la température limite (T1) vis-à-vis de la température limite (T2), il est possible de réaliser une adaptation spécifique aux besoins de sécurité respectifs selon les clients.

2. Agencement selon la revendication 1,
**caractérisé en ce que** le premier dispositif de commutation est en liaison active avec un contact de télécommunications.

3. Agencement selon la revendication 1 ou 2,
**caractérisé en ce que** les dispositifs de commutation comprennent des éléments en levier (7), qui se trouvent dans une première position sous la précontrainte d'un ressort (6), ladite première position étant fixée par une brasure fusible, de la cire, une matière thermoplastique ou un matériau similaire, et le point de fusion de ce matériau est choisi plus faible dans le cas du premier dispositif de commutation (5) que celui dans le cas du second dispositif de commutation (10).

4. Agencement selon la revendication 1 ou 2,
**caractérisé en ce que** les dispositifs de commutation comprennent des éléments en levier qui se trouvent sous la précontrainte d'au moins un ressort, et une première position du premier dispositif de commutation est fixée par un matériau tubulaire rétractable (11) de telle façon que lors d'une charge thermique jusqu'à la température limite T1, une variation de position de l'élément en levier respectif se produit avec signalisation optique simultanée par le processus de rétraction du matériau tubulaire.

5. Agencement selon l'une des revendications précédentes,
**caractérisé en ce que**, à l'intérieur de l'unité structurelle, deux plaques à varistors se trouvent parallèlement et à distance l'une de l'autre à titre d'éléments de limitation de surtension, et les dispositifs de commutation sont agencés entre les plaques à varistors sur une paroi de séparation, et des plaques ou des tôles de mise en contact sont prévues pour relier les varistors en contact thermique avec le dispositif de commutation respectif.
